# EUROPÄISCHE PATENTSCHRIFT

(11) **EP 2 771 575 B1**
(45) Veröffentlichungstag und Bekanntmachung des Hinweises auf die Patenterteilung: **14.03.2018**
(21) Anmeldenummer: 12794650.7
(22) Anmeldetag: 26.10.2012
(51) Int. Cl.: F04B 39/16, F15B 21/04, F16T 1/00, F16T 1/12, F16T 1/14

(54) **KONDENSATABSCHEIDEREINRICHTUNG FÜR EINE KOMPRESSORANORDNUNG ZUR ERZEUGUNG VON DRUCKLUFT**
CONDENSATE DRAINAGE DEVICE FOR A COMPRESSOR SYSTEM FOR GENERATING COMPRESSED AIR
APPAREIL DE DRAINAGE DE CONDENSAT D'UN SYSTÈME DE COMPRESSEUR POUR PRODUIRE DE L'AIR COMPRIMÉ

(30) Priorität: 27.10.2011 DE 102011117106
(43) Veröffentlichungstag der Anmeldung: 03.09.2014
(73) Patentinhaber: KNORR-BREMSE Systeme für Schienenfahrzeuge GmbH, 80809 München (DE)
(72) Erfinder: HARTL, Michael, 82008 Unterhaching (DE); POPESCU, Corneliu, München 80809 (DE); URRA, Christian, 81371 München (DE); LUND, Manuel, 82418 Murnau (DE)
(86) Internationale Anmeldenummer: PCT/EP2012/071229
(87) Internationale Veröffentlichungsnummer: WO 2013/060824

(56) Entgegenhaltungen:
- DE-A1- 2 053 383
- DE-A1- 4 323 005
- DE-A1- 4 323 048
- DE-A1- 19 646 635
- DE-A1-102009 054 064
- GB-A- 1 392 500

## Beschreibung

Die Erfindung betrifft eine Kondensatabscheidereinrichtung für eine Kompressoranordnung zur Erzeugung von Druckluft mit einem Abscheidergehäuse, das einen verdichterseitigen Einlassanschluss sowie einen Auslassanschluss zur Abführung der entwässerten Druckluft aufweist, wobei ein bodenseitiges Entwässerungsventit zum Ablassen des sich im Abscheidergehäuse angesammelten Kondensats über eine Ablassöffnung in die Umwelt vorgesehen ist, welches als ein über ein elektropneumatisches Steuerventil ansteuerbares, pneumatisch vorgesteuertes Sitzventil ausgebildet ist.

Das Einsatzgebiet der Erfindung erstreckt sich vornehmlich auf den Fahrzeugbau, insbesondere den Schienenfahrzeugbau. Zur Druckluftversorgung von Bremsanlagen bei Schienenfahrzeugen kommen in der Regel Kompressorenanordnungen mit Nachkühleinrichtungen zum Einsatz. In der Nachkühleinrichtung kondensiert Wasser, welches in der Verdichterluft enthalten ist. Wasser wird in Tropfenform zu einem Lufttrockner hin weitergeleitet. Herkömmliche Lufttrockner sind dafür konzipiert, den gasförmigen Wasseranteil aus der verdichteten Luft zu entfernen. Tropfenförmige Wasseranteile müssen dagegen vor dem Lufttrockner aus der Druckluft entfernt werden. Diese flüssigen Wasseranteile neigen bei tiefen Temperaturen allerdings zum Einfrieren. Da die Funktion einer dem Lufttrockner vorgeschalteten Kondensatabscheidereinrichtung auf das Abscheiden der flüssigen Phase aus der Druckluft gerichtet ist, ist die Einfriergefahr an dieser Stelle der Druckluftanlage am größten. In der Regel wird versucht, an die einfriergefährdeten Stellen Heizelemente anzubringen. Die Kondensatabscheidereinrichtung wird jedoch durch die vom Nachkühler kommende Druckluft ständig gekühlt. Als besonders kritisch bezüglich des Einfrierens hat sich der Bereich der Ablassöffnung sowie die elektrische Betätigungseinrichtung hierfür erwiesen, welche häufig als elektromagnetisches Ventil ausgeführt ist. Hierbei ist insbesondere die Kombination der elektrischen Betätigungseinrichtung mit dem Kondensat problematisch. Das Kondensat kann über die Betätigungselemente in die elektrische Betätigungseinrichtung eindringen und diese sofort außer Funktion setzten oder beim Einsetzen niedriger Temperaturen einfrieren.

Aus der DE 10 2009 054 064 A1 geht eine gattungsgemäße Kondensatabscheidereinrichtung hervor. Diese besteht aus einem Öl-/Wasserabscheider mit bodenseitigem Kondensatventil als Entwässerungsventil, welches über ein elektromagnetisches Ventil zum Öffnen und Schließen ansteuerbar ist, dessen Ausgang in einem Kondensatauffangbehälter mündet.

Das elektromagnetische Ventil öffnet und schließt eine Durchlassöffnung, durch die das Kondensat in geöffnetem Zustand hindurch nach außen fließen kann. Die Durchlassöffnung und das Magnetventil sind hierbei als eine Baugruppe gemeinsam an der Kondensatabscheidereinrichtung angebracht. Bei Anwendung im Tieftemperaturbereich kann es ohne separate Heizelemente an der Kondensatabscheidereinrichtung zu einem Einfrieren des Kondensats kommen.

Es ist daher die Aufgabe der vorliegenden Erfindung, eine Kondensatabscheidereinrichtung für eine Kompressoranordnung zur Erzeugung von Druckluft zu schaffen, bei welcher das Eintreten von flüssigem Kondensat in den Trocknungsbereich verhindert wird, um insbesondere bei niedrigen Außentemperaturen das Einfrieren von elektrischen Betätigungsmitteln zu vermeiden.

Die Aufgabe wird ausgehend von einer Kondensatabscheidereinrichtung gemäß dem Oberbegriff von Anspruch 1 in Verbindung mit dessen kennzeichnenden Merkmalen gelöst. Die nachfolgenden abhängigen Ansprüche geben vorteilhafte Weiterbildungen der Erfindung wieder.

Die Erfindung schließt die technische Lehre ein, dass das elektropneumatische Steuerventil des Entwässerungsventils außerhalb des Abscheidergehäuses in einem stets frostfreien Bereich der Kondensatabscheidereinrichtung angeordnet ist und über eine Steuerdruckleitung mit einem Vorsteueranschluss des insoweit pneumatisch vorgesteuerten Entwässerungsventils in Verbindung steht, wobei einer nachgeschalteten Lufttrocknereinrichtung entnehmbare trockene Druckluft oder zumindest auslassseitig der Kondensatabscheidereinrichtung zur Verfügung stehende entwässerte Druckluft zur Speisung des elektropneumatischen Steuerventils dient. Mit anderen Worten wird erfindungsgemäß die elektrische Betätigungseinrichtung, nämlich das elektropneumatische Steuerventil des Entwässerungsventils, von den rein pneumatischen Bestandteilen des Entwässerungsventils örtlich getrennt angeordnet. Die Ansteuerung des Entwässerungsventils erfolgt über eine elektronische Steuerung des elektropneumatischen Steuerventils.

Der Vorteil der erfindungsgemäßen Lösung liegt insbesondere darin, dass das sich im Abscheidergehäuse der Kondensatabscheidereinrichtung ansammelnde Kondensat die elektrischen Komponenten der Kondensatabscheidereinrichtung in keiner Weise beeinflussen kann. Denn das elektropneumatische Steuerventil lässt sich in einem Bereich der Drucklufterzeugungsanlage anordnen, welcher stets frostfrei ist. Zur Speisung des elektropneumatischen Steuerventils wird trockene Druckluft verwendet, welche einer nachgeschalteten Lufttrocknereinrichtung entnommen werden kann oder zumindest entwässerte Druckluft, welche auslassseitig der Kondensatabscheidereinrichtung zur Verfügung steht. Daher steht dem Entwässerungsventil stets trockene oder zumindest entsprechend entwässerte Druckluft über die Steuerdruckleitung zur Verfügung und die elektrischen Betätigungsmittel sowie elektronischen Bauteile kommen ausschließlich mit trockener oder zumindest entwässerter Druckluft in Verbindung, so dass hierdurch ein zusätzlicher Einfrierschutz gewährleistet wird. Die erfindungsgemäße Lösung trennt somit konsequent die Funktion des Kondensatablasses aus dem Abscheidergehäuse von der Funktion der elektrischen Steuerung des Entwässerungsventils.

Gemäß einer bevorzugten Ausführungsform der Erfindung ist das Entwässerungsventil nach Art eines Kolbenventils ausgeführt und ist vorzugsweise mit einem kegelförmigen Ventilsitz ausgestattet. Hierdurch ist die bewegliche Ventilmechanik des Entwässerungsventils besonders robust ausgebildet und neigt weniger zum Einfrieren.

Gemäß einer die Erfindung weiter verbessernden Maßnahme wird vorgeschlagen, dass im Bereich des pneumatisch vorgesteuerten Entwässerungsventils eine Heizeinrichtung integriert wird. Die Heizeinrichtung kann permanent oder bei Unterschreiten einer Mindesttemperatur mit elektrischer Energie versorgt werden, um den Bereich des Entwässerungsventils mit dieser aktiven Maßnahme zusätzlich vor einem Einfrieren zu schützen. Die Heizeinrichtung sollte in möglichst örtlicher Nähe zur beweglichen Ventilmechanik des Entwässerungsventils angeordnet sein.

Gemäß einer bevorzugten Ausführungsform ist das pneumatisch vorgesteuerte Entwässerungsventil mit Heizeinrichtung in einem aus Leichtmetall gefertigten Bodenteil des zylinderförmigen Abscheidergehäuses untergebracht. Durch die Materialwahl des Bodenteils wird ein günstiger Wärmeübergang der von der Heizeinrichtung erzeugten Wärme an das Entwässerungsventil realisiert.

Um die durch die Heizeinrichtung erzeugte Wärme vor einer ungenutzen Abstrahlung in die Umgebung zu schützen, wird vorgeschlagen, dass zumindest das Bodenteil des Abscheidergehäuses von einer thermischen Isolierung umgeben ist. Eine solche thermische Isolierung kann beispielsweise aus Isolierschalen bestehen, mit welchen das Abscheidergehäuse insgesamt oder nur das Bodenteil desselben ummantelt wird. Dies hat den Vorteil, dass die Heizleistung der Heizeinrichtung im Bereich des Abscheidergehäuses konzentriert bleibt und nicht zu einem großen Anteil über die Oberfläche des Abscheidergehäuses nach außen hin abgestrahlt wird. Die Ausführung der Isolierschalen ist vorzugsweise in einer Art, dass die Schalen geteilt sind, wobei die Isolierschalen nur teilweise an der metallischen Oberfläche des Abscheidergehäuses anliegen. Es entstehen hierdurch Luftkammern, die durch Stege getrennt sind, um eine zusätzliche Luftisolierschicht zu schaffen.

Neben einem solchen Bodenteil kann das vorzugsweise zylinderförmige Abscheidergehäuse an der gegenüberliegenden Stirnseite mit einem Deckelteil verschlossen werden. In einem solchen Deckelteil lassen sich der verdichterseitige Einlassanschluss und der Auslassanschluss zur Abführung der entwässerten Druckluft unterbringen.

Bei einer solchen konstruktiven Konfiguration bietet es sich an, das Abscheidergehäuse nach Art eines Drallabscheiders von in der Druckluft enthaltenen Kondensats auszubilden. Bei einem Drallabscheider wird die in das Abscheidergehäuse über den Einlassanschluss einströmende verdichterseitige Druckluft über eine spezielle Kanalführung in Drall versetzt, so dass die in der Druckluft enthaltenen Wassertropfen an die Innenwandung des Abscheidergehäuses geschleudert werden. Hiervon laufen diese in Richtung des Bodenteils und sammeln sich dort. Über das Entwässerungsventil wird das gesammelte Kondensat dann nach Außen abgelassen.

Gemäß einer weiteren, die Erfindung verbessernden Maßnahme wird vorgeschlagen, dass das Abscheidergehäuse mit Mitteln zur Pulsationsdämpfung ausgestattet ist. Hierdurch lassen sich Druckluftpulsationen, welche von einem vorgeschalteten Kolbenkompressor erzeugt werden, im Abscheidergehäuse dämpfen. Zur Pulsationsdämpfung ist das Volumen des Abscheidergehäuses derart abhängig vom Volumenstrom des Kompressors dimensioniert, dass die Druckluftpulsation signifikant gedämpft wird. Zusätzlich können im Abscheidergehäuse Mittel zur Druckluftumleitung integriert werden, um die Dämpfungswirkung weiter zu erhöhen.

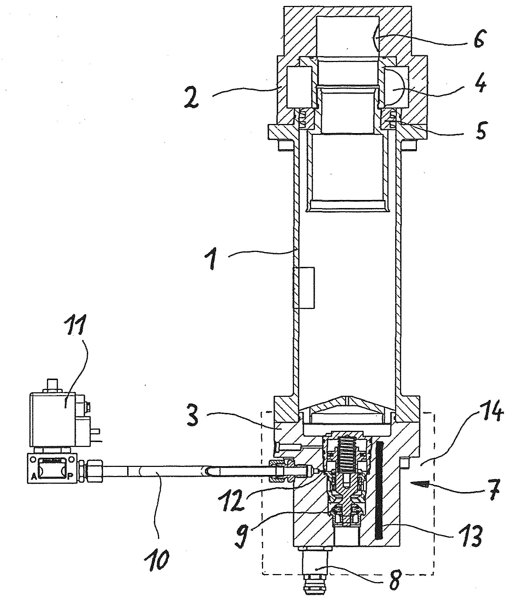

Weitere die Erfindung verbessernde Maßnahmen werden nachstehend gemeinsam mit der Beschreibung eines bevorzugten Ausführungsbeispiels der Erfindung anhand der Zeichnung näher dargestellt. Die einzige Figur zeigt eine perspektivische Schnittdarstellung einer Kondensatabscheidereinrichtung mit ortsfern hiervon installiertem elektropneumatischem Steuerventil.

Gemäß Figur besteht eine Kondensatabscheidereinrichtung im Wesentlichen aus einem zylinderförmigen Abscheidergehäuse 1, welches zur oberen Stirnseite hin mit einem Deckelteil 2 und zur unteren Stirnseite hin mit einem Bodenteil 3 verschlossen ist. Das Deckelteil 2 sowie das Bodenteil 3 sind über eine Flanschverbindung mit dem zylinderförmigen Abscheidergehäuse 1 verbunden.

Das zylinderförmige Abscheidergehäuse 1 ist bei diesem Ausführungsbeispiel nach Art eines Drallabscheiders ausgebildet. Die verdichterseitig über einen Einlassanschluss 4 einströmende Druckluft wird über eine Ringkanalstruktur 5 in eine Drallbewegung versetzt, so dass sich die in der Druckluft enthaltenen Wassertröpfchen an der Innenwandung des Abscheidergehäuses 1 ansammeln und in Richtung Bodenteil 3 abfließen. Die hierdurch entwässerte Druckluft strömt über einen im Deckelteil 2 angeordneten Auslassanschluss 6 ab, um diese einer - nicht weiter dargesellten - Lufttrocknereinrichtung zuzuführen.

Das sich im Bereich des Bodenteils 3 im Abscheidergehäuse 1 ansammelnde Kondensat wird über ein bodenseitiges Entwässerungsventil 7 und eine nachfolgend Ablassöffnung 8 an die Umwelt abgelassen.

Das Entwässerungsventil 7 ist als Sitzventil ausgebildet und weist einen kegelförmigen Ventilsitz 9 auf. Das Entwässerungsventil 7 verfügt über eine pneumatische Vorsteuerung, deren Steuerdruck von einem außerhalb des Abscheidergehäuses 1 über eine Steuerdruckleitung 10 angebundenes elektropneumatisches Steuerventil 11 bereitgestellt wird.

Das elektropneumatische Steuerventil ist insoweit als Pilotventil ausgebildet und derart ortsfern vom Abscheidergehäuse 1 angeordnet, dass es sich in einem gefriergeschützten Bereich des Fahrzeuges befindet. Die Steuerdruckleitung 10 steht mit einem Vorsteueranschluss 12 des Entwässerungsventils 7 in Verbindung. Das elektropneumatische Steuerventil 11 wird mit trockener Druckluft gespeist, welche der - nicht weiter dargestellten - Lufttrocknereinrichtung entnommen wird.

Das Bodenteil 3 der Kondensatabscheidereinrichtung ist weiterhin mit einer Heizeinrichtung 13 ausgestattet, welche ortsnah des Entwässerungsventils 7 im Bodenteil 3 integriert angeordnet ist. Um ein ungenutztes Abstrahlen der von der Heizeinrichtung 13 erzeugten Wärme in die Umgebung zu vermeiden, ist das Bodenteil 3 der Kondensatabscheidereinrichtung mit einer - hier nur schematisch dargesellten - thermischen Isolierung 14 ummantelt. Die thermische Isolierung 14 kann dabei aus zwei Polysterol-Halbschalen gebildet werden, welche sich um das Bodenteil 3 der Kondensatabscheidereinrichtung montieren lassen, beispielsweise durch Ankleben. Um die thermische Isolierwirkung weiter zur erhöhen, können in den Polysterol-Halbschalen Luftkammern eingebracht werden, die vorzugsweise in dem zum Bodenteil 3 angrenzenden Bereiche angeordnet sind. Zum Schutz der Polysterol-Halbschalen vor schädigender Einwirkung von Außen können diese wiederum mit einem Kunststoffgehäuse geschützt werden.

Die Erfindung ist nicht beschränkt auf das vorstehend beschriebene bevorzugte Ausführungsbeispiel. Es sind vielmehr auch Abwandlungen hiervon denkbar, welche vom Schutzbereich der nachfolgenden Ansprüche mit umfasst sind. So ist es beispielsweise auch möglich, dass das Entwässerungsventil nach einer anderen Bauart ausgeführt ist.

### Bezugszeichenliste

- 1: Abscheidergehäuse
- 2: Deckelteil
- 3: Bodenteil
- 4: Einlassöffnung
- 5: Ringkanalstruktur
- 6: Auslassöffnung
- 7: Entwässerungsventil
- 8: Ablassöffnung
- 9: Ventilsitz
- 10: Steuerdruckleitung
- 11: Steuerventil
- 12: Vorsteueranschluss
- 13: Heizeinrichtung
- 14: Thermische Isolierung

## Patentansprüche

1. Kondensatabscheidereinrichtung für eine Kompressoranordnung zur Erzeugung von Druckluft mit einem Abscheidergehäuse (1), das einen verdichterseitigen Einlassanschluss (4) sowie einen Auslassanschluss (6) zur Abführung der entwässerten Druckluft aufweist, wobei ein bodenseitiges Entwässerungsventil (7) zum Ablassen des sich im Abscheidergehäuse (1) angesammelten Kondensats über eine Ablassöffnung (8) in die Umwelt vorgesehen ist, welches als ein über ein elektropneumatisches Steuerventil (11) ansteuerbares pneumatisch vorgesteuertes Sitzventil ausgebildet ist,
**dadurch gekennzeichnet, dass** das elektropneumatische Steuerventil (11) des Entwässerungsventils (7) außerhalb des Abscheidergehäuses (1) in einem stets frostfreien Bereich der Kompressoranordnung angeordnet ist und über eine Steuerdruckleitung (10) mit einem Vorsteueranschluss (12) des Entwässerungsventils (7) in Verbindung steht, wobei einer nachgeschalteten Lufttrocknereinrichtung entnehmbare trockene Druckluft oder zumindest auslassseitig der Kondensatabscheidereinrichtung zur Verfügung stehende entwässerte Druckluft zur Speisung des elektropneumatischen Steuerventils (11) dient.

2. Kondensatabscheidereinrichtung nach Anspruch 1,
**dadurch gekennzeichnet, dass** das als Sitzventil ausgebildete Entwässerungsventil (7) nach Art eines Kolbenventils ausgeführt ist.

3. Kondensatabscheidereinrichtung nach Anspruch 1,
**dadurch gekennzeichnet, dass** das Entwässerungsventil (7) mit einem kegelförmigen Ventilsitz (9) ausgestattet ist.

4. Kondensatabscheidereinrichtung nach Anspruch 1,
**dadurch gekennzeichnet, dass** eine Heizeinrichtung (13) im Bereich des pneumatisch vorgesteuerten Entwässerungsventils (7) angeordnet ist.

5. Kondensatabscheidereinrichtung nach Anspruch 4,
**dadurch gekennzeichnet, dass** das pneumatisch vorgesteuerte Entwässerungsventil (7) mit Heizeinrichtung (13) in einem aus Leichtmetall gefertigten Bodenteil (3) des zylinderförmigen Abscheidergehäuses (1) untergebracht ist.

6. Kondensatabscheidereinrichtung nach Anspruch 1,
**dadurch gekennzeichnet, dass** der verdichterseitige Einlassanschluss (4) und der Auslassanschluss (6) zur Abführung der entwässerten Druckluft in einem Deckelteil (2) des zylinderförmigen Abscheidergehäuses (1) untergebracht ist.

7. Kondensatabscheidereinrichtung nach Anspruch 5,
**dadurch gekennzeichnet, dass** zumindest das Bodenteil (3) des Abscheidergehäuses (1) von einer thermischen Isolierung (14) umgeben ist.

8. Kondensatabscheidereinrichtung nach einem der vorstehenden Ansprüche,
**dadurch gekennzeichnet, dass** das Abscheidergehäuse (1) nach Art eines Drallabscheiders von in der Druckluft enthaltenden Kondensats ausgebildet ist.

9. Kondensatabscheidereinrichtung nach einem der vorstehenden Ansprüche, **dadurch gekennzeichnet, dass** das Abscheidergehäuse (1) mit Mitteln zur Pulsationsdämpfung ausgestattet ist.

## Claims

1. A condensate separator device for a compressor arrangement for the production of compressed air, the device comprising a separator housing (1) that has a compressor-side inlet connection (4) and an outlet connection (6) for discharging the dehydrated compressed air, wherein a base-side water drain valve (7) is provided to drain off the condensate that has collected in the separator housing (1) into the environment by way of a drainage aperture (8), said valve being designed as a pneumatically pilot-controlled seat valve that can be actuated by an electro-pneumatic control valve (11),
**characterised in that** the electro-pneumatic control valve (11) of the water drain valve (7) is arranged outside the separator housing (1) in an area of the compressor arrangement that is always frost-free and is connected by way of a control pressure line (10) to a pilot control connection (12) of the water drain valve (7), wherein dry compressed air that can be drawn from a downstream air dehydration device or at least dehydrated compressed air available on the outlet side of the condensate separator device serves to feed the electro-pneumatic control valve (11).

2. A condensate separator device according to claim 1, **characterised in that** the water drain valve (7) that is designed as a seat valve takes the form of a piston valve.

3. A condensate separator device according to claim 1, **characterised in that** the water drain valve (7) is equipped with a conical valve seat (9).

4. A condensate separator device according to claim 1, **characterised in that** a heating device (13) is arranged in the area of the pneumatically pilot-controlled water drain valve (7).

5. A condensate separator device according to claim 4, **characterised in that** the pneumatically pilot-controlled water drain valve (7) is accommodated with the heating device (13) in a light-alloy base part (3) of the cylindrical separator housing (1).

6. A condensate separator device according to claim 1, **characterised in that** the compressor-side inlet connection (4) and the outlet connection (6) for discharging the dehydrated compressed air are accommodated in a cover part (2) of the cylindrical separator housing (1).

7. A condensate separator device according to claim 5, **characterised in that** at least the base part (3) of the separator housing (1) is enclosed by thermal insulation (14).

8. A condensate separator device according to one of the preceding claims, **characterised in that** the separator housing (1) is designed as a cyclone separator of condensate contained in the compressed air.

9. A condensate separator device according to one of the preceding claims, **characterised in that** the separator housing (1) is equipped with means for pulsation damping.

## Revendications

1. Dispositif de séparation de condensat d'un système de compresseur de production d'air comprimé, comprenant une enveloppe (1) de séparateur, qui a un raccord (4) d'entrée du côté du compresseur ainsi qu'un raccord (6) de sortie pour évacuer l'air comprimé déshydraté, une soupape (7) de déshydratation du côté du fond étant prévue pour faire sortir à l'atmosphère, par une ouverture (8) de sortie, le condensat accumulé dans l'enveloppe (1) du séparateur, soupape constituée sous la forme d'une soupape à siège pilotée pneumatiquement, pouvant être commandée par une soupape (11) pilote électropneumatique,
**caractérisé en ce que** la soupape (11) pilote électropneumatique de la soupape (7) de déshydratation est disposée à l'extérieur de l'enveloppe (1) du séparateur, dans une partie toujours sans givre du système de compresseur, et est en liaison, par un conduit (10) de pression de commande, avec un raccord (12) pilote de la soupape (7) de déshydratation, de l'air comprimé sec pouvant être prélevé d'un dispositif de séchage d'air en aval ou de l'air comprimé déshydraté, à disposition au moins du côté de la sortie du dispositif de séparateur de condensat, servant à l'alimentation de la soupape (11) pilote électropneumatique.

2. Dispositif de séparation de condensat suivant la revendication 1,
**caractérisé en ce que** la soupape (7) de déshydratation, constituée en soupape à siège, est réalisée à la manière d'une soupape à piston.

3. Dispositif de séparation de condensat suivant la revendication 1,
**caractérisé en ce que** la soupape (7) de déshydratation est équipée d'un siège (9) de soupape en forme de cône.

4. Dispositif de séparation de condensat suivant la revendication 1,
**caractérisé en ce qu'**un dispositif (13) de chauffage est prévu dans la région de la soupape (7) de déshydratation pilotée pneumatiquement.

5. Dispositif de séparation de condensat suivant la revendication 4,
**caractérisé en ce que** la soupape (7) de déshydratation pilotée pneumatiquement est logée, avec un dispositif (13) de chauffage, dans une partie (3) de fond en métal léger de l'enveloppe (1) de forme cylindrique du séparateur.

6. Dispositif de séparation de condensat suivant la revendication 1,
**caractérisé en ce que** le raccord (4) d'entrée du côté du compresseur et le raccord (6) de sortie d'évacuation de l'air comprimé déshydraté sont logés dans une partie (2) de couvercle de l'enveloppe (1) de forme cylindrique du séparateur.

7. Dispositif de séparation de condensat suivant la revendication 5,
**caractérisé en ce qu'**au moins la partie (3) de fond de l'enveloppe (1) du séparateur est entourée d'un isolant (14) thermique.

8. Dispositif de séparation de condensat suivant l'une des revendications précédentes,
**caractérisé en ce que** l'enveloppe (1) du séparateur est constituée à la manière d'un séparateur cyclone de condensat contenu dans l'air comprimé.

9. Dispositif de séparation de condensat suivant l'une des revendications précédentes,
**caractérisé en ce que** l'enveloppe (1) du séparateur est équipée de moyens d'amortissement des vibrations.
